Europäisches Patentamt

European Patent Office

Office européen des brevets

(11) Publication number: 0 400 884 A2

# EUROPEAN PATENT APPLICATION

(21) Application number: 90305593.7

(22) Date of filing: 23.05.90

(51) Int. Cl.5: C08G 63/52, C09D 167/06, C09D 5/04, C08F 283/01

(30) Priority: 02.06.89 US 360562

(43) Date of publication of application: 05.12.90 Bulletin 90/49

(84) Designated Contracting States: BE DE FR GB IT NL

(71) Applicant: ARCO CHEMICAL TECHNOLOGY INC.
3 Christina Centre Suite 902 201 N Walnut Street
Wilmington Delaware 19801(US)

(72) Inventor: Harris, Stephen H.
1206 Estate Drive
West Chester, Pennsylvania 19380(US)

(74) Representative: Cropp, John Anthony David et al
MATHYS & SQUIRE 10 Fleet Street
London, EC4Y 1AY(GB)

(54) Unsaturated polyester gel coats containing 2-methyl-1,3-propanediol.

(57) Styrene-soluble unsaturated polyesters useful for the preparation of improved gel coats wherein the diol component comprises from 10 to 100 mole percent 2-methyl-1,3-propanediol. The improved gel coats provided by this invention have unexpectedly high weather resistance, flexibility, tensile strength, hardness, and modulus.

EP 0 400 884 A2

## UNSATURATED POLYESTER GEL COATS CONTAINING 2-METHYL-1,3-PROPANEDIOL

The present invention relates to unsaturated polyesters suitable for use in thermosettable resin compositions. More particularly, the invention pertains to unsaturated polyesters containing 2-methyl-1,3-propanediol which can be employed in the preparation of improved gel coats.

### BACKGROUND OF THE INVENTION

The use of gel coats in reinforced plastic articles to produce decorative and protective exterior surfaces requiring little or no finishing is well known. A gel coat is typically applied to the surface of a mold as a film ca. 5 to 50 mils thick. While still tacky, the gel coat is laminated with a reinforcement material such as glass fiber and additional thermosettable resin before being cured to give the final reinforced plastic article. The protruding fibers of the reinforcement material thus are covered by the cured gel coat, giving a smooth, glossy appearance to the surface of the article. The gel coat can also act as a barrier to liquids to prevent the "weeping" caused by the wicking action of the glass fibers. Fire retardancy, opacity, color, or added protection against degradation by ultraviolet light may be provided by incorporation of suitable additives in the gel coat.

Typically, a gel coat composition will contain an unsaturated polyester, a vinyl monomer such as styrene, an inhibitor to provide sufficient shelf life, and a thixotropic agent which permits the gel coat to be applied to a vertical surface without sagging or running. The gel coat is cured using a catalyst such as an organic peroxide to initiate free radical polymerization of the vinyl monomer. The vinyl monomer interpolymerizes with the unsaturated polyester to form a cross-linked, thermoset network. Methods of using gel coats are described in more detail in B. G. Murray; A. J. Andren Plastics Eng. June 1962, p. 119; the teachings of this reference are incorporated herein by reference in their entirety.

The properties of a cured gel coat are highly dependent on the structure and composition of the unsaturated polyester employed. High resistance to water and oxidation is particularly important since mar of the end-use applications of gel coats involve outdoor exposure or frequent exposure to water. Gel coats, for example, are commonly used in the molding of boats, bath tubs, swimming pools, shower stalls, recreation vehicles, simulated marble sinks, and the like.

One type of unsaturated polyester commonly used in gel coat resin compositions is a condensation copolymer of neopentyl glycol (2.2-dimethyl-1,3-propanediol), an unsaturated dicarboxylic acid such as fumaric or maleic acid, and a saturated dicarboxylic acid. Such unsaturated polyesters are disclosed, for example, in Brit. Pat. No. 1,319,243; J. H. Davis et al SPI Reinforced Plastics Composites Division 26th Annual Technical Conference, 1971, Section 12-C, p.1; and H. R. Edwards SPI Reinforced Plastics Composites Division 34th Annual Technical Conference, 1979, Section 4-D, p. 1. The properties of gel coats containing these polyesters are generally satisfactory with respect to water and oxidative resistance. However, the use of neopentyl glycol as the diol component of the unsaturated polyester results in crystallizable polyesters which precipitate at ambient temperatures from styrene polyester mixtures. Since gel coat resin compositions are often stored for prolonged periods of time before use, incompatibility with styrene or other vinyl monomers is a severe practical disadvantage. In addition, neopentyl glycol sublimes at a relatively low temperature. Processing difficulties in the condensation polymerizations used to prepare neopentyl glycol-containing polyesters can thus arise since such polymerizations are normally carried out at elevated temperatures.

Styrene compatibility problems may be avoided by the use of propylene glycol as the diol in place of neopentyl glycol. Davis et al and Edwards describe unsaturated polyester gel coats containing propylene glycol. As a result of this substitution however, the weatherability of the cured gel coat is significantly compromised, particularly with respect to water and ultraviolet light resistance. Blistering, cracking, crazing, and loss of surface gloss are more pronounced. In addition, the lower reactivity of propylene glycol compared to neopentyl glycol, a consequence of the secondary hydroxyl group of propylene glycol, results in longer batch times and increased color when preparing the unsaturated polyester. High color can be a disadvantage since gel coats are often used to provide clear or light-colored decorative surfaces. Another drawback of propylene glycol is its relatively low boiling point (188°C); substantial glycol losses can thus occur during the condensation polymerization unless special measures are taken.

Since the cured gel coat will constitute the outer "skin" of a reinforced plastic article and thus must protect the article from physical damage, it is also important that the unsaturated polyester chosen yield a gel coat which is hard, yet flexible and strong enough to withstand externally applied forces. Gel coat compositions typically contain pigments, fillers, and other additives which tend to increase the brittleness and lower the strength and toughness of the cured resin. However, the gel coat cannot be reinforced to counteract these effects without adversely affecting surface appearance. The physical properties of the cured polyester resin itself must be maximized to provide satisfactory gel coat performance.

The flexibility and strength of a gel coat can be improved by the use of a glycol ether such as diethylene glycol or a linear aliphatic diacid such as adipic acid. The hardness and weather resistance of gel coats containing such components, however, tend to be much lower than for neopentyl glycol-based gel coats. Glycol ether-based gel coats are particularly susceptible to staining and water damage. Like propylene glycol, diethylene glycol promotes undesirable color formation in the unsaturated polyester during the condensation polymerization process.

Clearly, there is a need for improved unsaturated polyesters which are low in color, highly soluble in vinyl monomer and which may be used to provide cured gel coats having enhanced physical properties, including better strength, flexibility, and superior weatherability.

## SUMMARY OF THE INVENTION

This invention provides an unsaturated polyester suitable for use in an improved gel coat. The unsaturated polyester is comprised of recurring units of an unsaturated dicarboxylic acid moiety, a saturated dicarboxylic acid moiety, and a diol. The molar ratio of unsaturated dicarboxylic acid:saturated dicarboxylic acid is from about 1:2 to 2:1 and the molar ratio of diol:total dicarboxylic acid is from about 0.90 to 1.30. From about 10 to 100 mole percent of the diol is 2-methyl-1,3-propanediol. The combined acid and hydroxyl number is from about 30 to 150 milligrams of potassium hydroxide per gram of unsaturated polyester.

The invention additionally provides a thermosettable resin composition suitable for producing an improved gel coat, wherein the resin composition is comprised of the unsaturated polyester described herein, a vinyl monomer, an inhibitor and an amount of a thixotropic agent effective to substantially prevent sagging of the resin composition when applied as a film of from about 5 to 50 mil in thickness to a vertical surface of a substrate.

Also provided by this invention is a method of producing an improved gel coat. The method comprises applying the thermosettable resin composition of this invention and an amount of a catalyst effective to accomplish substantial reaction of the unsaturated polyester and the vinyl monomer to a substrate to form a gelled film of from about 5 to 50 mil in thickness. A reinforced plastic article may be produced by placing a reinforcement material, which may include an additional curable unsaturated polyester resin composition, in intimate contact with the gelled film and then curing the gelled film to accomplish substantially complete reaction of the unsaturated polyester and the vinyl monomer. The reinforcement material is thereby bonded to the resulting cured film to form the reinforced plastic article.

## DETAILED DESCRIPTION OF THE INVENTION

The unsaturated polyester of this invention is comprised of recurring units of an unsaturated dicarboxylic acid moiety, a saturated dicarboxylic acid moiety, and a diol.

The unsaturated dicarboxylic acid moiety may be derived from any suitable dicarboxylic acid or dicarboxylic acid derivative containing a carbon-carbon double bond that is polymerizable in a free radical manner with a vinyl monomer. Depending on the method of unsaturated polyester preparation selected, such compounds may comprise the parent diacid or the corresponding anhydride, ester, acid halide, or the like. Examples of unsaturated dicarboxylic acid moieties include, but are not limited to, maleic acid, fumaric acid, itaconic acid, citraconic acid, mesaconic acid, and aconitic acid. Mixtures of unsaturated dicarboxylic acid moieties may be employed. Maleic acid and fumaric acid are the preferred unsaturated dicarboxylic acid moieties.

The saturated dicarboxylic acid moiety may be any dicarboxylic acid or derivative, including anhydrides, esters, acid halides, and the like, that does not contain a double bond reactive with a vinyl monomer in a free radical addition polymerization. Phthalic acids such as orthophthalic acid, isophthalic acid, terephthalic acid, and alkyl-substituted phthalic acids, halogenated phthalic acids such as tetrabromo-and tetrachloro phthalic acid, hydrogenated phthalic acids such as tetrahydrophthalic acid and hexahydrophthalic acid, Diels-Alder adducts of cyclic conjugated diolefins and unsaturated dicarboxylic acids such as norbornene dicarboxylic acid and bicyclo [2.2.2] octene dicarboxylic acid, and linear aliphatic dicarboxylic

acids of formula

$$HO\overset{O}{\overset{\|}{C}} (CH_2)_n \overset{O}{\overset{\|}{C}}OH$$ where n = 2-8 such as adipic acid, sebacic, azelaic and succinic acid are examples of suitable saturated dicarboxylic acid moieties. The use of mixtures of saturated dicarboxylic acid moieties is also contemplated. Orthophthalic acid (from phthalic anhydride, for example) and isophthalic acid are the preferred saturated dicarboxylic acid moieties.

Minor amounts of unsaturated mono carboxylic acids such as methacrylic acid and acrylic acid and saturated polycarboxylic acids such as trimellitic acid may also be used in the unsaturated polyesters of this invention.

The molar ratio of unsaturated dicarboxylic acid moiety:saturated dicarboxylic acid moiety should be from about 1:2 to 2:1, preferably from about 4:5 to 5:4. Most preferably, the unsaturated and saturated dicarboxylic acid moieties are present in an approximately equimolar ratio (i.e., about 1:1).

At least about 10 mole percent of the diol recurring units in the unsaturated polyester are derived from 2-methyl-1,3-propanediol. This diol may be obtained by a number of synthetic routes. For example, the hydroformylation hydrogenation of allyl alcohol yields 2-methyl-1,3-propanediol in addition to 1.4-butanediol. Both of the hydroxyl groups of 2-methyl-1,3-propanediol are primary; condensation polymerization of this diol therefore is advantageously rapid. The unsaturated polyesters of this invention generally are relatively low in color. Another processing advantage of 2-methyl-1,3-propanediol is that it is relatively high boiling (b.p. 213° C) compared to propylene glycol and does not tend to sublime at high temperatures as does neopentyl glycol.

Optionally, from 0 up to about 90 mole percent of the diol component may be a dihydroxy compound other than 2-methyl-1,3-propanediol. Any suitable diol, especially aliphatic diols having up to six carbon atoms, may be used, including, for example, 1,2-diols such as ethylene glycol, 1,2-propylene glycol, and 1,2-butylene glycol, 1,3-diols such as neopentyl glycol, 1,3-propanediol, and 1,3-butanediol, 1.4-diols such as 1,4-butanediol, as well as other diols such as 2-methyl-1,3-pentanediol, 1.4-cyclohexanedimethanol, diethylene glycol, tripropylene glycol, and 1,6-hexanediol. Other diols such as Bisphenol A or alkoxylated Bisphenol A may also be used. In general, it is preferred that the molecular weight of the diol not exceed about 250. Mixtures of diols may be used. Propylene glycol and neopentyl glycol are the most preferred diols to be used in combination with 2-methyl-1,3-propanediol. The preferred amount of propylene glycol or neopentyl glycol present is from about 10 to 90 mole percent of the total amount of diol. Minor amounts of polyols (i.e., compounds having more than two hydroxy groups) may be used.

The molar ratio of diol:total dicarboxylic acid moiety in the unsaturated polyester of this invention is from about 0.90 to 1.30, preferably from about 1.00 to 1.15. The number of moles of total dicarboxylic acid moiety is equal to the number of moles of unsaturated dicarboxylic acid moiety plus the number of moles of saturated dicarboxylic acid moiety. The unsaturated polyester has a generally alternating structure in which dicarboxylic acid moieties are separated by diol units.

Any of the methods known in the art for the condensation reaction of diols and dicarboxylic acids or dicarboxylic acid derivatives may be used to prepare the unsaturated polyesters of this invention. Suitable methods are described, for example, in G. Odian Principles of Polymerization 2nd Ed., John Wiley and Sons, New York, 1981, pp. 102-105, the teachings of which are incorporated herein by reference. For example, the unsaturated polyesters may be produced by direct esterification of a dicarboxylic acid or dicarboxylic aid anhydride with a diol, by reaction of a dicarboxylic acid halide with a diol, or by transesterification of a dicarboxylic acid ester with a diol. For reasons of economy and convenience, direct esterification is the preferred method.

Typically, one or more diols, two or more dicarboxylic acids, and (optionally) a condensation catalyst are combined in a reaction vessel and heated to between about 100° C and 280° C (preferably, between about 180° C and 250° C). The condensation catalyst may be, for example, a protic or Lewis acid, a base such as calcium acetate, antimony trioxide, or titanium tetralkoxide, or an alkyl tin compound such as dibutyl tin oxide, hydrated monobutyl tin oxide, or dibutyl tin dilaurate. The water produced as a by-product in the condensation reaction is preferably removed by distillation, either at atmospheric or reduced pressure. Any diol removed overhead is preferably recycled to the reaction vessel. An azeotrope agent such as xylene, toluene, or other such organic solvent can be used to facilitate the removal of water; this is particularly advantageous in the latter stages of the condensation polymerization. In a preferred embodiment, the saturated dicarboxylic acid or derivative is reacted first with the diol before the unsaturated dicarboxylic acid or derivative is introduced. The reactive unsaturation will thus tend to be near the ends of the resulting polyester.

Condensation is continued until the desired viscosity, molecular weight, or combined acid and hydroxyl number is achieved. The unsaturated polyester of this invention generally should have a combined acid and hydroxyl number of from about 30 to 150 milligrams, or more preferably from about 35 to 90 of potassium hydroxide per gram of unsaturated polyester. The number average molecular weight is preferably from about 750 to 3750. For optimum resistance to the elements and corrosive environments, the number average molecular weight is preferably greater than about 2000. In preparing the unsaturated polyester, it is usually preferred to use an excess of the diol so as to have more hydroxy end-groups than carboxylic acid end-groups in the final product and to compensate for certain side reactions involving the diol which sometimes occur.

To provide the thermosettable resin composition of this invention, the unsaturated polyester is combined with a vinyl monomer, an inhibitor, and a thixotropic agent. The weight ratio of unsaturated polyester:vinyl monomer is not critical, but generally is from about 25:75 to 90:10, or, more preferably, from about 50:50 to 75:25. The molar ratio of vinyl monomers:unsaturated dicarboxylic acid moiety is preferably from about 1:1 to 6:1. Suitable vinyl monomers are any ethylenically unsaturated compounds capable of addition polymerization in a free radical manner or which are known in the art to be usable in an unsaturated polyester resin composition. Preferred vinyl monomers include vinyl aromatic monomers such as styrene, divinyl benzene, $\alpha$-methyl styrene, alkyl substituted styrenes such as vinyl toluene and t-butyl styrene, halo substituted styrenes such as chlorostyrene, and the like. Other vinyl monomers which may be used include, for example, acrylic esters such as methyl methacrylate and ethyl acrylate, unsaturated mono-carboxylic acids such as acrylic acid and methacrylic acid, mono- and polyolefinic hydrocarbons such as isoprene, heptene, and cyclohexene, unsaturated nitriles such as acrylonitrile, as well as vinyl chloride, vinyl acetate, triallyl cyanurate, and diallyl phthalate. Mixtures of vinyl monomers may be used. It is preferred that the vinyl monomer be a liquid at ambient temperatures so that it may function as a solvent and diluent for the thermosettable resin composition. Styrene is the preferred vinyl monomer.

The amount of the thixotropic agent used will vary depending on the viscosity and other characteristics of the unsaturated polyester/vinyl monomer mixture, but should be sufficient to effectively prevent substantial sagging of the mixture when applied as a 5-50 mil thick film to a vertical surface. Because the thermosettable resin compositions of this invention are preferably applied to a substrate by spraying, however, compositions should be formulated to have relatively low viscosity at high shear. Generally, this amount will be from about 0.5 to 5 weight percent of thermosettable resin composition. Any suitable thixotropic agent may be employed, including, for example, cellulose acetate butyrate, organo-modified clays, fumed silica, colloidal silicas, and silica aerogels.

One or more inhibitors are present in the thermosettable resin composition to provide sufficient shelf life and to control gel and cure times once the composition has been catalyzed. If inhibitor is not present, the thermosettable resin composition will begin to gel almost immediately after preparation. Sufficient inhibitor is added to effectively prevent gellation of the composition at room temperature in the absence of a catalyst. Any inhibitor known to those skilled in the art may be used, including, for example, benzoquinone, hydroquinone, substituted derivatives of hydroquinone, substituted phenols such as tertiary butyl catechol, and quaternary ammonium salts. From about 0.001 to 0.10 weight percent inhibitor is preferably present.

Conventional unsaturated polyesters, including rigid, resilient, or flexible types, may be used in combination with the unsaturated polyesters of this invention if desired. Thermoplastic additives to decrease shrinkage during curing and to reduce the sink marks on the surface of the gel coat may also be incorporated into the thermosettable resin composition of this invention. Suitable thermoplastic additives include any of the materials useful for the production of low shrink/low profile cured resins, including co- and homopolymers of styrene, caprolactone polymers, acrylic polymers, polyolefins, poly vinyl chloride, poly vinyl acetate; vinyl chloride/vinyl acetate copolymers, and the like and mixtures thereof.

A pigment may be incorporated into the thermosettable resin composition to impart color or opacity to the gel coat. The pigment is preferably light-stable and chemically inert towards the other components of the composition. Inorganic pigments such as titanium dioxide, zinc oxide, chrome yellow, ferric oxide, chrome green, and the like are favored. Carbon black may also be employed. Typically, from 0 to about 15 weight percent of pigment is used. Ultraviolet light stabilizers such as hydroxy benzophenones can also be present; concentrations of from 0 to about 1 weight percent preferred.

The thermosettable resin composition may additionally contain an accelerator. An accelerator is typically used to promote rapid decomposition of the catalyst, thus initiating addition polymerization of the vinyl monomer and the unsaturated polyester. Accelerators are particularly useful when a room temperature cure is desired. Suitable accelerators include, for example, metallic naphthenates (e.g., cobalt naphthenate), amines (e.g., dimethylaniline) and organosulfur compounds. Typical accelerator concentrations are from about 0.005 to 0.2 weight percent of the thermosettable resin composition.

A filler may also be present in the thermosettable resin composition of this invention. Fillers help to opacify the gel coat, reduce shrinkage, and improve hardness and also aid in pigment dispersion.

Carbonates, sulfates, clays, talcs, and the like as well as any other fillers known in the art may be used. The filler, which preferably has a small average particle size, may comprise from 0 to about 50 weight percent of the thermosettable resin composition.

The thermosettable resin composition of this invention is formed into a gel coat by applying the composition and a catalyst to a substrate to form a gelled film of from about 5 to 50 mils in thickness. A mold release agent such as a wax or silicone oil is generally used to facilitate separation of the cured gel coat from the substrate. The gelled film is preferably from about 15 to 35 mils thick; more than one film can be applied once the first film has gelled sufficiently. The resin composition and catalyst may be applied to the substrate using any suitable method. Such methods include, for example, the use of a single pot spray system, in which the resin composition and catalyst are premixed before application, a two pressure pot spray system, in which the catalyst and resin composition are applied separately and mixed on the surface of the substrate, or a catalyst injection spray system. Such methods are described in Murray et al. Other suitable methods known to those skilled in the art such as brushing or wiping may also be used.

Suitable catalysts include any of the initiators capable of initiating free radical polymerization of the vinyl monomer and unsaturated polyester. The amount used should be sufficient to accomplish substantially complete reaction of the ethylenically unsaturated components; typically, this will be from about 0.5 to 5 parts by weight per 100 parts of the thermosettable resin composition. Suitable catalysts include, but are not limited to, organic hydroperoxides such as cumene hydroperoxide, organic peroxides such as di-t-butyl peroxide and dicumyl peroxide, peresters of carboxylic acids such as t-butyl peroctoate and t-butyl perbenzoate, perketals, perketones such as methyl ethyl ketone hydroperoxide, diacyl peroxides such as benzoyl peroxide and lauroyl peroxide, as well as peroxidicarbonates and azo compounds. Mixtures of catalysts may advantageously be used. Benzoyl peroxide, methyl ethyl ketone hydroperoxide, and t-butyl peresters are the preferred initiators. As is well known in the art, the gel and cure time of the gel coat may be controlled as desired by selection of different catalyst/accelerator inhibitor systems, and by varying the relative amounts of each component used. It is desirable to have a relatively long pot life to allow sufficient time for the thermosettable resin composition to be applied to the substrate (a mold pattern, for example) and laminated while still tacky with the reinforcement material. At the same time, the cure time after lamination should be kept as short as possible to maximize productivity.

The reinforcement material is preferably applied to the gel coat film after the thermosettable resin composition has partially polymerized and gelled, but before it cures completely and is no longer tacky. Any suitable reinforcement material is usable, particularly glass fiber mats, glass rovings, milled glass fibers, asbestos fibers, chopped glass fibers, polyester fibers, polyamide fibers, carbon fibers, or Kevlar® fibers (a product of E.I. dupont de Nemours, Inc.). In addition to the reinforcement material, additional curable unsaturated polyester resin can be applied to the gel coat. This additional curable unsaturated polyester resin may be the same as the thermosettable unsaturated polyester composition of this invention, but may also be a standard type of resin. Examples of such standard resins are described in J. Makhlouf Encyclopedia of Chemical Technology 3d Ed., Vol. 18 (1982), p. 575-594 and J. Selley Encyclopedia of Polymer Science and Technology Vol. 12 (1988), pp. 256-290, the teachings of which are incorporated by reference herein in their entirety. A laminated structure may be built up by applying successive layers of reinforcement material and resin. Any suitable laminating method may be used including, for example, hand-lay-up or spray-up techniques. The order of the lamination steps is not critical. The reinforcement material may be prewetted with the additional curable unsaturated polyester resin. Alternatively, the additional curable unsaturated polyester resin is applied to the gel coat before the reinforcement material. The final reinforced plastic article is then obtained by curing the unsaturated polyester resin composition(s) so that the vinyl monomer and unsaturated polyester are essentially completely reacted to form a cross-linked thermoset. The reinforcement material is consequently bonded to the resulting cured gel coat, thus producing the reinforced plastic article. A post-cure in which the article is heated above room temperature for a period of time may be desirable.

The cured gel coats produced in accordance with this invention have an outstanding overall balance of properties. Excellent water and ultraviolet resistance are obtained in combination with high tensile strength, elongation, hardness, flexibility, flexural strength, and modulus. These properties are unexpected in view of the significant decreases in modulus, melting point, and softening point which are known to result when 2-methyl-1,3-propanediol is incorporated into high molecular weight saturated polyester thermoplastic resins (U.S. Pat. Nos. 4,396,746; 4,415,727; and 4,381,379). In addition, the thermosettable resin compositions of this invention remain homogeneous for prolonged periods of time at room temperature due to the high solubility of the unsaturated polyester in styrene and other vinyl monomers.

Without further elaboration, it is believed that one skilled in the art can, using the preceding description, utilize the present invention to its fullest extent. The following examples, therefore, are to be considered as merely illustrative and not limitative of the invention in any way whatsoever. Without departing from the spirit and scope of this invention, one skilled in the art can make various changes and modifications of the invention to adopt it to various usages, conditions, and embodiments. All of these variations are considered to be encompassed by the present invention.

## EXAMPLES 1-4

These examples illustrate the advantages of the thermosettable unsaturated polyester compositions of this invention compared to conventional neopentyl glycol-containing resins.

A 2 L 5-neck flask fitted with a nitrogen inlet, thermometer, sampling port, stirrer, and reflux condenser was charged at 100°C with 2 moles of isophthalic acid and 4.2 moles of a glycol or a mixture of glycols. Example 1 is a comparative example in which the glycol used was neopentyl glycol, while Examples 2 and 3 used mixtures of neopentyl glycol and 2-methyl-1,3-propanediol as shown in Table I. Example 4 used 100% 2-methyl-1,3-propanediol as the glycol component.

The mixture in each example was heated to 190-200°C for 6 hours until the acid number fell below 20 on a 100% solids basis. The nitrogen flow through the flask was 80 mL/min. The mixture was then cooled to room temperature and combined with 2 moles of maleic anhydride. Esterification was continued at 190-220°C until the unsaturated polyester had an acid number of 20 on a 100% solids basis and a Gardner-Holt viscosity of >U [determined at 25°C as a 60% solution in ethylene glycol monomethyl ether]. The unsaturated polyester was diluted to 65% solids using styrene and inhibited with 100 ppm tert-butyl catechol.

Upon standing one month, the unsaturated polyester solution of Example 1 turned cloudy. After six weeks, separation into two layers was observed. In contrast, the solutions containing unsaturated polyesters prepared from 2-methyl-1,3-propanediol (Examples 2-4) remained clear and homogeneous for six months.

Plaques measuring 1/8" in thickness were prepared from the unsaturated polyester/styrene solutions by diluting to 55% solids with additional styrene and catalyzing with 1 weight % benzoyl peroxide. The plaques were cured in an oven for 16 hours at 57°C, 1 hour at 82°C, and finally 1 hour at 121°C. Physical properties were measured experimentally using appropriate ASTM test methods.

Table I indicates that the tensile strength and elongation values of the cured resin composition nearly doubled when neopentyl glycol was replaced with 2-methyl-1,3-propanediol during formulation of the unsaturated polyester. These properties were significantly enhanced even when only 20 or 40% of the diol component was 2-methyl-1,3-propanediol. Surprisingly, the improvements in tensile strength and elongation were achieved without compromising the flexural strength or modulus. In addition, hardness unexpectedly was not adversely affected by the presence of 2-methyl-1,3-propanediol in the unsaturated polyester of Examples 2-4 (42-46 Barcol Hardness, Inst. 934-1). Even after 100 hours in boiling distilled water, the resin compositions of this invention (Examples 2-4) continued to exhibit generally superior performance relative to the resin composition containing neopentyl glycol (Example 1), as shown in Table II.

## EXAMPLES 5-6

These examples demonstrate the advantages of using 2-methyl-1,3-propanediol in an unsaturated polyester containing phthalic anhydride and maleic anhydride.

Using the same apparatus and procedure as in Examples 1-4, 2 moles phthalic anhydride, 2 moles maleic anhydride, and 4.08 moles glycol (neopentyl glycol in Comparative Example 5, 2-methyl-1-3-propanediol in Example 6) were reacted at 200°C for the time indicated in Table III. The unsaturated polyester obtained was diluted to 65% solids in styrene and inhibited with 100 ppm tert-butyl catechol. The solution of Comparative Example 5 displayed complete phase separation within one month, while the solution of Example 6 was still homogeneous after five months. Plaques were prepared and tested using the same procedures described for Examples 1-4. As the data in Table III indicate, the presence of 2-methyl-1,3-propanediol in the unsaturated polyester resulted in greatly improved tensile strength and elongation values. Flexural strength, modulus, and hardness were unexpectedly not adversely affected; thus, the overall balance of physical properties was enhanced by the use of 2-methyl-1,3-propanediol as a replacement for neopentyl glycol.

7

## EXAMPLES 7-8

The advantages of substituting 2-methyl-1,3-propanediol for neopentyl glycol in unsaturated polyesters based on isophthalic acid, maleic anhydride and propylene glycol are illustrated by these examples. A 12L 5-neck flask equipped with a nitrogen inlet, thermometer, sampling port, stirrer, and reflux condenser was charged with 12 moles isophthalic acid, 13 moles propylene glycol, and 14.3 moles of either neopentyl glycol (Comparative Example 7) or 2-methyl-1,3-propanediol (Example 8). The mixture was heated at 190-200° until the acid number was 10 meq KOH/g. After cooling to room temperature, 13 moles maleic anhydride was added and the esterification continued until the acid number reached the value shown in Table IV.

Replacing the neopentyl glycol with 2-methyl-1,3-propanediol yielded an unsaturated polyester which exhibited much higher tensile strength and tensile modulus when cured in a thermosettable resin composition without any loss of tensile strength, tensile modulus, or hardness (Table IV). These property advantages were maintained even after 100 hour exposure to boiling water (Table V). The plaques for Examples 7-8 were prepared and tested using the same procedures described for Examples 1-4, except that a solids level of 60% was used.

## EXAMPLES 9-10

These examples demonstrate the property advantages realized using 2-methyl-1,3-propanediol and propylene glycol in a phthalic anhydride maleic anhydride unsaturated polyester. The apparatus described in Examples 7-8 was charged with 14 moles phthalic anhydride, 14 moles maleic anhydride, 10.36 moles propylene glycol, and 19.04 moles of either neopentyl glycol (Comparative Example 9) or 2-methyl-1,3-propanediol (Example 10). The esterification was carried out at 180-210° C until the acid number shown in Table IV was achieved. The unsaturated polyester was then diluted to 62-63% solids with styrene and inhibited with 150 ppm tert-butyl catechol.

When used to prepare a cured resin using the same procedures as in Examples 7-8, the unsaturated polyester of Example 10 containing 2-methyl-1,3-propanediol exhibited greatly superior tensile strength and elongation compared to the neopentyl glycol-containing unsaturated polyester of Comparative Example 9. Tensile modulus, flexural strength, flexural modulus, and hardness were not adversely affected by the substitution of 2-methyl-1,3-propanediol for neopentyl glycol. The cured resin of Example 10 displayed water resistance equivalent to that of Comparative Example 9 (Table V).

## EXAMPLES 11-12

These examples illustrate the excellent weatherability of gel coats containing 2-methyl-1,3-propanediol. The unsaturated polyester styrene solutions of Examples 7-8 were mixed with 1 wt. % fumed silica (thixotropic agent) and 0.3% of a 6% cobalt naphthenate solution (accelerator) to give clear thermosettable unsaturated polyester compositions. Each batch of clear thermosettable unsaturated polyester composition was divided in half. One half was combined with 10 wt. % calcium carbonate (filler) and 0.5 wt. % carbon black (pigment) to give a black unsaturated polyester composition.

Two panels were prepared in each example using these unsaturated polyester compositions catalyzed with 2 wt. % methylethyl ketone hydroperoxide. One panel had a 10 mil thick film of the clear composition applied over a 10 mil thick film of the black composition, while the other had one 20 mil thick film of the black composition only. The gel coats were laminated with a commercial isophthalic acid-based resin composition and glass mat. The weathering characteristics of the cured panels are given in Table IV. Weatherability was improved, particularly with respect to gloss retention and discoloration, when the unsaturated polyester contained 2-methyl-1,3-propanediol rather than neopentyl glycol.

TABLE I

| CURED RESIN PHYSICAL PROPERTIES | | | | |
|---|---|---|---|---|
| Example | 1* | 2 | 3 | 4 |
| Mole % 2-Methyl-1,3-Propanediol in Unsat. Polyester | 0 | 20 | 40 | 100 |
| Tensile St., psi | 6962 | 7337 | 8685 | 11,321 |
| Tensile Mod., psi ( x 1000) | 310 | 310 | 321 | 295 |
| Flexural St., psi ( x 1000) | 17998 | 17701 | 16793 | 18769 |
| Flexural Mod., psi | 527 | 533 | 508 | 524 |
| Elongation, % | 2.79 | 3.3 | 3.65 | 5.4 |

*Comparative Example

TABLE II

| CURED RESIN PHYSICAL PROPERTIES AFTER 100 HR. WATER BOIL | | | | |
|---|---|---|---|---|
| Example | 1* | 2 | 3 | 4 |
| Tensile St., psi | 8145 | 5869 | 9206 | 9283 |
| Flexural St., psi | 11,338 | 12,036 | 16,289 | 14,264 |
| Flexural Mod., psi ( x 1000) | 500 | 543 | 518 | 508 |
| Elongation, % | 2.90 | 1.51 | 3.79 | 4.21 |

*Comparative Example

TABLE III

| Example | 5* | 6 |
|---|---|---|
| 2-Methyl-1,3-Propanediol, Mole % | 0 | 100 |
| Neopentyl Glycol, Mole % | 100 | 0 |
| Reaction Time, Hr. | 12.5 | 10 |
| Acid No., meq KOH/g | 22.5 | 20 |
| Gardner-Holt Viscosity (25° C, 60% in ethylene glycol monomethyl ether) | O-P | R-S |
| Tensile St., psi | 6419 | 9695 |
| Modulus, psi (x 1000) | 306 | 304 |
| Flexural St., psi | 17,685 | 18,495 |
| Modulus, psi (x 1000) | 551 | 551 |
| Elongation, % | 2.24 | 4.85 |

*Comparative Example

TABLE IV

| Example | 7* | 8 | 9* | 10 |
|---|---|---|---|---|
| 2-Methyl-1,3-Propanediol, Mole % | 0 | 52.4 | 0 | 64.8 |
| Neopentyl Glycol, Mole % | 52.4 | 0 | 64.8 | 0 |
| Propylene Glycol, Mole % | 47.6 | 47.6 | 35.2 | 35.2 |
| Acid No., meq. KOH·g | 20 | 19 | 20.5 | 20.3 |
| Gardner-Holt Viscosity (25% C. 60% in ethylene glycol monomethyl ether) | V | W | T-U | V |
| Tensile St., psi | 8898 | 11.810 | 7492 | 11.090 |
| Tensile Mod., psi ( x 1000) | 274 | 328 | 346 | 343 |
| Flexural St., psi | 18,640 | 19.834 | 18.101 | 20.042 |
| Flexural Mod., psi ( x 1000) | 534 | 536 | 571 | 568 |
| Elongation % | 4.6 | 5.4 | 2.8 | 4.7 |

*Comparative Examples

TABLE V

| PROPERTIES AFTER 100 HR. WATER BOIL | | | | |
|---|---|---|---|---|
| Example | 7* | 8 | 9 | 10 |
| Tensile St., psi | 7113 | 8915 | 5283 | 5517 |
| Tensile Mod., psi ( x 1000) | 308 | 301 | 333 | 329 |
| Flexural St., psi | 12,368 | 14,281 | 8289 | 7896 |
| Flexural Mod., psi ( x 1000) | 528 | 529 | 529 | 491 |
| Elongation (%) | 3.4 | 4.0 | 2.0 | 2.2 |

TABLE VI

| 150 HOUR ENVIRONMENTAL EXPOSURE | | |
|---|---|---|
| Example | 11* | 12 |
| Unsat Polyester Styrene Solution of Ex. No. | 7 | 8 |
| % Gloss Retention Q-UV (Q-Panel) 8 hr. UV, 4 hr. water | | |
| 20 mil. Black | 41 | 40 |
| 10 mil. clear 10 mil. Black | 96 | 99 |
| Water Boil - Relative Rating (1 = Best) (20 mil Black) | | |
| Gloss Retention | 1 | 1 |
| Fiber Prominence | 1 | 1 |
| Blister Cracks | 2 | 2 |
| Discoloration | 3 | 1 |

*Comparative Example

## Claims

1. An unsaturated polyester suitable for use in an improved gel coat, said polyester comprising:
(a) recurring units of an unsaturated dicarboxylic acid moiety;
(b) recurring units of a saturated dicarboxylic acid moiety; and

(c) recurring units of a diol;

wherein the molar ratio of unsaturated dicarboxylic acid moiety:saturated dicarboxylic acid moiety is from about 1:2 to 2:1, the molar ratio of diol:total dicarboxylic acid moiety is from about 0.90 to 1.30, from about 10 to 100 mole percent of the diol is 2-methyl-1,3-propanediol, and the combined acid and hydroxyl number is from about 30 to 150 milligrams of potassium hydroxide per gram of unsaturated polyester.

2. The unsaturated polyester of claim 1 wherein the molar ratio of unsaturated dicarboxylic acid moiety:saturated dicarboxylic acid moiety is from about 4:5 to 5:4.

3. The unsaturated polyester of claim 1 or claim 2, wherein the unsaturated dicarboxylic acid moiety is selected from maleic acid, fumaric acid, itaconic acid, citraconic acid, mesaconic acid, aconitic acid, and mixtures thereof.

4. The unsaturated polyester of any one of claims 1 to 3, wherein the saturated dicarboxylic acid moiety is selected from phthalic acids, halogenated phthalic acids, hydrogenated phthalic acids, Diels-Alder adducts of cyclic conjugated diolefins and unsaturated dicarboxylic acids, linear aliphatic dicarboxylic acids of formula

$$HO\overset{O}{\overset{\|}{C}} \ (CH_2)_n \ \overset{O}{\overset{\|}{C}}OH \text{ where } n = 2\text{-}8, \text{ and mixtures thereof.}$$

5. The unsaturated polyester of any one of claims 1 to 4, wherein from about 10 to 90 mole percent of the diol is selected from propylene glycol and neopentyl glycol.

6. An unsaturated polyester as claimed in claim 1 or claim 5, comprising:

(a) recurring units of an unsaturated dicarboxylic acid moiety selected from maleic acid, fumaric acid, itaconic acid, citraconic acid, mesaconic acid, aconitic acid, and mixtures thereof;

(b) recurring units of a saturated dicarboxylic acid moiety selected from phthalic acids, halogenated phthalic acids, hydrogenated phthalic acids, Diels-Alder adducts of cyclic conjugated diolefins and unsaturated dicarboxylic acids, linear aliphatic dicarboxylic acids of formula

$$HO\overset{O}{\overset{\|}{C}} \ (CH_2)_n \ \overset{O}{\overset{\|}{C}}OH \text{ where } n = 2\text{-}8, \text{ and mixtures thereof.}$$

and

(c) recurring units of a diol;

wherein the molar ratio of unsaturated dicarboxylic acid moiety:saturated dicarboxylic acid moiety is from about 4:5 to 5:4, the molar ratio of diol:total dicarboxylic acid moiety is from about 1.00 to 1.15, and the combined acid and hydroxyl number is from about 35 to 90 milligrams of potassium hydroxide per gram of unsaturated polyester.

7. A thermosettable resin composition suitable for producing an improved gel coat, said composition comprising:

(a) an unsaturated polyester as claimed in any one of claims 1 to 6;

(b) a vinyl monomer;

(c) an amount of an inhibitor effective to prevent gellation of the resin composition at room temperature in the absence of a catalyst; and

(d) an amount of a thixotropic agent effective to substantially prevent sagging of the resin composition when applied as a film of from about 5 to 50 mil in thickness;

wherein the weight ratio of unsaturated polyester:vinyl monomer is from about 25:75 to 90:10.

8. The thermosettable resin composition of claim 7 further comprising a pigment.

9. The thermosettable resin composition of claim 7 or claim 8 further comprising a filler.

10. The thermosettable resin composition of claim 7, claim 8 or claim 9, further comprising an accelerator.

11. The thermosettable resin composition of any one of claims 7 to 10, wherein the vinyl monomer is a vinyl aromatic monomer.

12. The thermosettable resin composition of claim 11, wherein the vinyl monomer is styrene.

13. A composition as claimed in claim 11 or claim 12, wherein the weight ratio of unsaturated polyester:vinyl monomer is from about 50:50 to 75:25.

14. A method of producing an improved gel coat, said method comprising applying a thermosettable resin composition as claimed in any one of claims 7 to 13 and an amount of a catalyst effective to accomplish substantial reaction of the unsaturated polyester and the vinyl monomer to a substrate to form a gelled film of from about 5 to 50 mil in thickness.

15. The method of claim 14, wherein the catalyst is selected from the organic peroxides, organic hydroperoxides, perketones, diacyl peroxides, peresters of carboxylic acids, and mixtures thereof.

16. A method of producing a reinforced plastic article having an improved surface, said method comprising the steps of:

(a) applying to a substrate a thermosettable resin composition as claimed in any one of claims 7 to 13, and an amount of a catalyst effective to accomplish substantial reaction of the unsaturated polyester and the vinyl monomer to form a gelled film of from about: 5 to 50 mil in thickness;

(b) placing a reinforcement material in intimate contact with the gelled film; and

(c) curing the gelled film to accomplish substantially complete reaction of the unsaturated polyester and the vinyl monomer, whereby the reinforcement material is bonded to the resulting cured film to form the reinforced plastic article.

17. The method of claim 16, wherein the reinforcement material is admixed with a curable unsaturated polyester resin before step (c).

18. The method of claim 16 or claim 17, wherein the gelled film is coated with a curable unsaturated polyester resin after step (a) and before step (b).

19. A reinforced plastic article having a surface comprising a cured resin composition as claimed in any one of claims 7 to 13.